# EUROPÄISCHE PATENTSCHRIFT

(11) **EP 3 073 141 B1**
(45) Veröffentlichungstag und Bekanntmachung des Hinweises auf die Patenterteilung: **04.09.2019**
(21) Anmeldenummer: 16157533.7
(22) Anmeldetag: 26.02.2016
(51) Int. Cl.: F16D 13/52, F16D 13/20, F16D 13/06, F16D 13/64

(54) **KUPPLUNGSBAUGRUPPE**
COUPLING ASSEMBLY
COMPOSANT D'EMBRAYAGE

(30) Priorität: 23.03.2015 DE 102015205147
(43) Veröffentlichungstag der Anmeldung: 28.09.2016
(73) Patentinhaber: Schaeffler Technologies AG & Co. KG, 91074 Herzogenaurach (DE)
(72) Erfinder: Cintula, Marián, 90701 Myjava (SK); Antálek, Martin, 908 49 Kátov (SK)

(56) Entgegenhaltungen:
- US-A- 1 469 564
- US-A- 1 472 710
- US-A- 1 594 259
- US-A1- 2015 014 113
- US-A1- 2015 027 840

## Beschreibung

Die vorliegende Erfindung betrifft eine Kupplungsbaugruppe für eine Kupplung, ein Getriebe oder ein Differenzial eines Antriebsstrangs eines Fahrzeugs.

Ein Verbrennungsmotor eines Kraft- oder Nutzfahrzeugs gibt für einen Fahrzeugführer nur in einem bestimmten Drehzahlbereich eine nutzbare Leistung ab. Um diesen Drehzahlbereich für verschiedene Fahrzustände des Fahrzeugs nutzen zu können, benötigt dieses ein automatisches oder ein manuell schaltbares Getriebe bzw. Kupplungsgetriebe. Solch ein Getriebe bzw. Kupplungsgetriebe ist über eine Kupplung mit dem Verbrennungsmotor mechanisch koppelbar. Aufgrund unterschiedlicher und auch gestiegener Anforderungen an Betätigungskräfte, ein Leistungsverhalten und zu übertragende Motormomente der Kupplung bzw. des Kupplungsgetriebes, kommen eine Vielzahl von Kupplungen bzw. Kupplungsgetrieben in den Antriebssträngen von Fahrzeugen zur Anwendung. So kommen beispielsweise nass laufende Lamellenkupplungen zur Anwendung, die als Einzel-, Doppel- oder Mehrfachkupplungen ausgebildet sein können. Ferner kommen in Automatikgetrieben von Nutzfahrzeugen wie Baumaschinen und Sonderfahrzeugen nass laufende Lamellenkupplungen zur Anwendung.

Neben einer Hauptfunktion eines Verbindens und Trennens beispielsweise einer Kurbelwelle des Verbrennungsmotors und/oder einer Abtriebswelle eines Elektromotors mit bzw. von einer Getriebeeingangswelle des Fahrzeugs, besitzt die Kupplung eine Reihe weiterer wichtiger Aufgaben. Sie soll ein weiches und ruckfreies Anfahren des Fahrzeugs ermöglichen, ein schnelles Schalten des Getriebes gewährleisten, Drehschwingungen des Verbrennungsmotors vom Getriebe fernhalten und so Rasselgeräusche und Verschleiß vermindern, als ein Überlastschutz für den Antriebsstrang,
z. B. bei Schaltfehlern, dienen, sowie verschleißarm und möglichst einfach austauschbar sein. Hierbei soll die Kupplung bei einem geringen Bauraumverbrauch im Antriebsstrang möglichst kostengünstig in ihrer Montage und ihrem Betrieb sein. In einem Sperrdifferential hat eine Kupplung die Aufgabe einer Rutschkupplung und in Nutzfahrzeugen auch als eine Betriebs- oder Parkbremse (Federspeicherbremse).

Aufgrund eines Kostendrucks und eines angeforderten erhöhten Leistungsverhaltens bei permanent kleiner werdenden Bauräumen in den Antriebssträngen der Fahrzeuge treten zunehmend Angelegenheiten in einen Fokus der Entwickler, welche bis dato nur geringfügige bzw. einfach zu behebende Probleme verursachten. Ein solcher Problembereich besteht z. B. bei vielen (Doppel-)Kupplungen oder Automatikgetrieben bei den dort vergleichsweise kleinen, zur Verfügung stehenden Bauräumen. Ferner besteht ein Problembereich bei Kupplungsgetrieben für Nutzfahrzeuge bei einem axial zur Verfügung stehenden Bauraum bei einer gleichzeitig effizienten Leistungsübertragung. Hierbei soll z. B ein schnelles automatisiertes Schalten zwischen einer Vielzahl von Gängen gewährleistest sein, wobei eine Kupplungsbaugruppe des Kupplungsgetriebes kompakt ausgebildet sein soll und die zu schaltenden Drehmomente dauerhaft sicher und verschleißarm übertragen soll.

Es ist eine Aufgabe der Erfindung, eine verbesserte Kupplungsbaugruppe zur Verfügung zu stellen. Mittels der verbesserten Kupplungsbaugruppe soll es z. B. bei gleichbleibenden Außenabmessungen einer Kupplungsbaugruppe oder einer Kupplung möglich sein, ein erhöhtes, insbesondere ein vergleichsweise deutlich erhöhtes Drehmoment übertragen zu können.

Darüber hinaus soll es gemäß der Erfindung möglich sein, eine Kupplungsbaugruppe bzw. eine Kupplung mit einem bestimmten übertragbaren Drehmoment durch eine baulich kleinere Kupplungsbaugruppe bzw. Kupplung zu ersetzen, ohne Einbußen bei einer Performanz hinnehmen zu müssen. Des Weiteren soll die sicher betreibbare Kupplungsbaugruppe einen geringen axialen und/oder radialen Bauraumverbrauch, z. B. in der Drehmomentübertragungseinrichtung, bei einer effizienten Leistungsübertragung besitzen. Sie soll zudem einen konstruktiv einfachen und kompakten sowie einen einfach zu montierenden Aufbau besitzen und des Weiteren kostengünstig in ihrer Herstellung, ihrer Montage, ihrem Betrieb und/ oder ihrer Wartung sein.

Die Aufgabe der Erfindung ist mittels einer Kupplungsbaugruppe für eine Kupplung, ein Getriebe oder ein Differenzial eines Antriebsstrangs eines Fahrzeugs, gemäß Anspruch 1 gelöst. - Vorteilhafte Weiterbildungen, zusätzliche Merkmale und/oder Vorteile der Erfindung ergeben sich aus den abhängigen Ansprüchen und/oder der folgenden Beschreibung.

Unter einer Kupplungsbaugruppe oder einer Kupplung soll im Folgenden generell ein Maschinenelement als Organisationseinheit verstanden sein, welches einer mechanisch lösbaren Verbindung wenigstens zweier bevorzugt koaxialer Wellen, insbesondere einer Abtriebs- und einer Antriebswelle eines Kraft- oder Nutzfahrzeugs, oder wenigstens zweier bevorzugt koaxialer Maschinenelemente dient. Die erfindungsgemäße Kupplungsbaugruppe für eine Kupplung bzw. ein Kupplungsgetriebe kann dabei auf alle Antriebsstränge von Fahrzeugen, z. B. von Kraft- oder Nutzfahrzeugen, bzw. auf sämtliche Drehmomentübertragungseinrichtungen angewendet werden. Bevorzugt ist die erfindungsgemäße Kupplungsbaugruppe als eine nass laufende (Mehrfach-) Kupplungsbaugruppe für ein Automatikgetriebe ausgebildet.

Die Lamellenscheibe für einen Lamellenhalter weist wenigstens ein Kraftübertragungselement auf, wobei das Kraftübertragungselement im Wesentlichen in Radialrichtung der Lamellenscheibe bewegbar in der Lamellenscheibe eingerichtet ist, und mittels des Kraftübertragungselements eine Radialkraft in der Kupplungsbaugruppe einrichtbar ist. D. h. die Radialkraft in der Kupplungsbaugruppe ist zwischen zwei Lamellenhaltern einrichtbar. Die Lamellenscheibe kann ferner eine oder zwei Trägerplatten aufweisen, an/in welcher das Kraftübertragungselement im Wesentlichen in Radialrichtung beweglich aufgenommen ist. Bevorzugt ist die Lamellenscheibe als eine gebaute und insbesondere als eine geschweißte Lamellenscheibe ausgebildet. Des Weiteren kann die Lamellenscheibe als eine Außenalmelle oder eine Innenlamelle ausgebildet sein.

Die Trägerplatte kann eine Lagereinrichtung für das Kraftübertragungselement aufweisen, an/in welcher das Kraftübertragungselement in beide Umfangsrichtungen der Lamellenscheibe und in wenigstens eine Axialrichtung der Lamellenscheibe gelagert ist. Bzw. die Trägerplatte kann eine Lagereinrichtung für das Kraftübertragungselement aufweisen, an/in welcher das Kraftübertragungselement in beide Radialrichtungen beweglich geführt ist, wobei die Radialkraft von radial außen nach innen oder von radial innen nach außen übertragbar ist. Hierbei kann die Lagereinrichtung als eine Lagerschale in der Trägerplatte ausgebildet sein, wobei die beiden Umfangsränder der Lagerschale bevorzugt parallel zueinander und im Wesentlichen in Radialrichtung verlaufend in der Trägerplatte ausgebildet sind.

Hierbei sind die Innenkonturen der Lagerschale einer Trägerplatte und/ oder die Innenkonturen zweier Lagerschalen betreffender Trägerplatten der Lamellenscheibe bevorzugt im Wesentlichen komplementär zu Außenkonturen des Kraftübertragungselements ausgebildet. Dies betrifft natürlich einen aus der Lamellenscheibe herausstehenden Abschnitt des Kraftübertragungselements, wie einen z. B. weiter unten erläuterten Angriffsabschnitt, nicht. Hierbei ist im Wesentlichen das gesamte Kraftübertragungselement, abgesehen von einem oder zwei Angriffsabschnitten, im Wesentlichen formschlüssig, natürlich mit einem gewissen Spiel, in der Lamellenscheibe aufgenommen, durch die Lagerschale bzw. die Lagerschalen zwangsgeführt und besitzt in Relation zur Lamellenscheibe im Wesentlichen nur einen einzigen Freiheitsgrad, nämlich in Radialrichtung, d. h. nach radial innen und wieder nach radial außen, bzw. vice versa.

Die Lagereinrichtung kann eine Führungseinrichtung umfassen, mittels welcher das Kraftübertragungselement in beide Umfangsrichtungen gelagert und/oder in beide Radialrichtungen beweglich geführt ist. Hierbei kann die Führungseinrichtung in Umfangsrichtung zentral an der Lagereinrichtung vorgesehen oder zentral in der Lagereinrichtung ausgebildet sein, und das Kraftübertragungselement kann eine dazu wenigstens abschnittsweise komplementäre oder korrespondierende Führungseinrichtung aufweisen. Die Führungseinrichtung der Lagereinrichtung kann als ein in Radialrichtung langgestrecktes Führungselement und die Führungseinrichtung des Kraftübertragungselements kann als eine in Radialrichtung langgestreckte Führungsausnehmung ausgebildet sein, bzw., vice versa, kann die Führungseinrichtung der Lagereinrichtung als eine in Radialrichtung langgestreckte Führungsausnehmung und die Führungseinrichtung des Kraftübertragungselements kann als ein in Radialrichtung langgestrecktes Führungselement ausgebildet sein.

Das Kraftübertragungselement weist bevorzugt einen Angriffsabschnitt für ein Inangriffbringen des Kraftübertragungselements mit dem Lamellenhalter und ggf. diesen Angriffsabschnitt für eine Montage des Kraftübertragungselements im/am Lamellenhalter auf. Das Kraftübertragungselement kann radial außen einen äußeren Angriffsabschnitt für ein Inangriffbringen des Kraftübertragungselements mit dem Lamellenhalter und bevorzugt radial innen einen inneren Angriffsabschnitt für ein Inangriffbringen des Kraftübertragungselements mit einem zweiten Lamellenhalter aufweisen. Der äußere Angriffsabschnitt kann radial außen eine konvexe Kontur, insbesondere eine wenigstens abschnittsweise kreisförmige Kontur besitzen, wobei der dieser wenigstens teilweise als ein positives Kreissegment ausgebildet sein kann. Der innere Angriffsabschnitt kann radial innen eine konkave Kontur, insbesondere eine wenigstens abschnittsweise kreisförmige Kontur besitzen, wobei dieser wenigstens teilweise als ein negatives Kreissegment ausgebildet sein kann.

Das Kraftübertragungselement kann nach radial außen oder nach radial innen mechanisch vorgespannt in der Lagereinrichtung bzw. der Lamellenscheibe eingerichtet sein. Hierbei kann zwischen dem Kraftübertragungselement und der Lamellenscheibe ein Energiespeicher vorgesehen sein, welcher insbesondere zwischen der Führungseinrichtung und dem Kraftübertragungselement in einem Fenster des Kraftübertragungselements vorgesehen ist. Der Energiespeicher ist bevorzugt als ein Federelement, insbesondere ein Druckfederelement, ausgebildet, das bevorzugt mehrfach s-förmig oder schlangenförmig ausgebildet ist, wobei das Federelement in Axialrichtung vergleichsweise kurz ausgebildet ist. Hierbei ist das Fenster als ein Federfenster ausgebildet.

Das Kraftübertragungselement kann im Wesentlichen lediglich translatorisch in Radialrichtung bewegbar in der Lamellenscheibe eingerichtet sein. Ferner kann das Kraftübertragungselement als ein Klemmübertragungselement und/oder als ein im Wesentlichen federsteifes Kraftübertragungselement ausgebildet sein. Die Lamellenscheibe kann derart ausgebildet sein, dass in einem im Wesentlichen unbelasteten Zustand der Lamellenscheibe das Kraftübertragungselement nach radial außen absteht und/oder nach radial innen vorsteht. Gemäß der Erfindung können sich an/in der Lamellenscheibe in Umfangsrichtung eine Mehrzahl von in der Lamellenscheibe eingerichteten Kraftübertragungselementen mit einer Mehrzahl von Reibelementen bzw. - flächen abwechseln. Es können z. B. fünf, sechs, sieben, acht, neun, zehn, elf, zwölf, dreizehn, vierzehn, fünfzehn, sechzehn, siebzehn, achtzehn, neunzehn, zwanzig oder mehr Kraftübertragungselemente und/oder Reibelemente/-flächen an/in der Lamellenscheibe vorgesehen sein. Bevorzugt ist die Lamellenscheibe eine Lamellenscheibe für eine erfindungsgemäße Kupplungsbaugruppe.

Die erfindungsgemäße Kupplungsbaugruppe weist Lamellenscheiben zur Übertragung eines Drehmoments aufgrund einer Axialkraft auf die Lamellenscheiben auf, wobei wenigstens eine Lamellenscheibe in Radialrichtung der Kupplungsbaugruppe bewegbare, von der eigentlichen Lamellenscheibe separate, Kraftübertragungselemente aufweist, und mittels den Kraftübertragungselementen eine Radialkraft innerhalb der Kupplungsbaugruppe einrichtbar ist, wobei mittels den Kraftübertragungselementen ein Drehmoment innerhalb der Kupplungsbaugruppe übertragbar ist. Die Kupplungsbaugruppe kann zwei Lamellenhalter und für jeweils einen Lamellenhalter jeweils wenigstens eine Lamellenscheibe umfassen, wobei der jeweilige Lamellenhalter mit seiner Lamellenscheibe bevorzugt in Axialrichtung der Kupplungsbaugruppe beweglich gelagert und bevorzugt in Umfangsrichtung der Kupplungsbaugruppe hauptsächlich oder im Wesentlichen drehfest verbunden ist.

Mit der Kupplungsbaugruppe ist bevorzugt ein Teildrehmoment mittels eines axial einrichtbaren Kraftschlusses und/oder insbesondere ein Teildrehmoment mittels eines radial einrichtbaren Kraftschlusses zwischen den Lamellenhaltern über die Kraftübertragungselemente übertragbar. Die Kraftübertragungselemente der wenigstens einen Lamellenscheibe können derart in der Lamellenscheibe eingerichtet sein, dass bei einer Beaufschlagung eines ersten Lamellenhalters mit einem Drehmoment und einer Beaufschlagung der Lamellenscheiben mit einer Axialkraft, das Drehmoment in den zweiten Lamellenhalter wenigstens auch radial einleitbar ist. Bei der Beaufschlagung der Lamellenscheiben mit der Axialkraft können die Kraftübertragungselemente einerseits an einem Abschnitt des zweiten Lamellenhalters angreifen und fest ansitzen und dabei können die Kraftübertragungselemente andererseits an einem Abschnitt des ersten Lamellenhalters reibbehaftet angreifen. Die Axialkraft entspricht dabei im Wesentlichen einer Aktuierungskraft der Kupplungsbaugruppe.

Bei einem Initiieren der Axialkraft auf die Lamellenscheiben können sich die Kraftübertragungselemente nach radial innen oder nach radial außen bewegen und das (Teil-) Drehmoment zwischen den Lamellenhaltern übertragen. Hierfür können die Kraftübertragungselemente bevorzugt in Ausnehmungen im zweiten Lamellenhalter angreifen und das Drehmoment auf den zweiten Lamellenhalter übertragen, oder die Kraftübertragungselemente können bevorzugt in Ausnehmungen im ersten Lamellenhalter angreifen und das Drehmoment reibbehaftet auf den ersten Lamellenhalter übertragen. - Der erste Lamellenhalter kann als ein Innenlamellenhalter oder ein Innenring und entsprechend eine erste Lamellenscheibe als eine Innenlamelle ausgebildet sein, und der zweite Lamellenhalter kann als ein Außenlamellenhalter oder ein Außenring und eine zweite Lamellenscheibe entsprechend als eine Außenlamelle ausgebildet sein. Dies kann auch kinematisch umgekehrt ausgebildet sein, d. h. die Bezeichnung mit eins bzw. innen tauscht mit der Bezeichnung mit zwei bzw. außen die Plätze.

Ist die Lamellenscheibe als Außenlamellenscheibe einem Außenlamellenhalter zugehörig, so ist diese in ihn eingehängt bzw. eingefädelt, und die Außenlamellenscheibe zentriert sich in dem Außenlamellenhalter bevorzugt über die Kraftübertragungselemente, welche in die Ausnehmungen im Außenlamellenhalter eingreifen. Hierbei verläuft, neben einer axialen Erstreckung, eine einzelne Ausnehmung von radial innen im Außenlamellenhalter nach radial außen in den Außenlamellenhalter. - Ist die Lamellenscheibe als Innenlamellenscheibe einem Innenlamellenhalter zugehörig, so ist diese auf ihm aufgehängt bzw. aufgefädelt, und die Innenlamellenscheibe zentriert sich auf dem Innenlamellenhalter bevorzugt über die Kraftübertragungselemente, welche in die Ausnehmungen des Innenlamellenhalters eingreifen. Hierbei verläuft, neben einer axialen Erstreckung, eine einzelne Ausnehmung von radial außen am Innenlamellenhalter nach radial innen in den Innenlamellenhalter.

Gemäß der Erfindung kann der Innenring in erster Näherung als ein Hohlzylinder ausgebildet sein und kann radial innen bevorzugt eine Verzahnung aufweisen. Ferner kann der Innenring radial außen eine Verzahnung aufweisen, mittels welcher die wenigstens eine Innenlamelle axial verschieblich und drehfest auf dem Innenring montierbar ist. Der Außenring kann in erster Näherung als ein Hohlzylinder ausgebildet sein und radial außen bevorzugt eine Verzahnung aufweisen. Ferner kann der Außenring radial innen die in Axialrichtung verlaufenden Ausnehmungen aufweisen, mittels welchen die wenigstens eine Außenlamelle axial verschieblich und hauptsächlich oder im Wesentlichen drehfest im Innenring montierbar ist. Die Kupplungsbaugruppe weist bevorzugt eine erfindungsgemäße Lamellenscheibe auf. - Es ist natürlich möglich, all dies kinematisch umzukehren.

Die Erfindung ist im Folgenden anhand von Ausführungsbeispielen unter Bezugnahme auf die beigefügte detaillierte und nicht maßstabsgetreue Zeichnung näher erläutert. Elemente, Bauteile oder Komponenten, welche eine identische, univoke oder analoge Ausbildung und/oder Funktion besitzen, sind in der Figurenbeschreibung, der Bezugszeichenliste und den Patentansprüchen mit denselben Bezugszeichen versehen und/oder in der Zeichnung mit denselben Bezugszeichen gekennzeichnet. Mögliche, in der Beschreibung nicht erläuterte, in der Zeichnung nicht dargestellte und/oder nicht abschließende Alternativen, statische und/oder kinematische Umkehrungen, Kombinationen etc. zu den erläuterten Ausführungsbeispielen der Erfindung bzw. einzelnen Baugruppen, Teilen oder Abschnitten davon, können der Bezugszeichenliste entnommen werden.

Sämtliche erläuterten Merkmale, auch die der Bezugszeichenliste, sind nicht nur in der angegebenen Kombination bzw. den angegebenen Kombinationen, sondern auch in einer anderen Kombination bzw. anderen Kombinationen oder in Alleinstellung anwendbar. Insbesondere ist es möglich, anhand der Bezugszeichen und den diesen zugeordneten Merkmalen in der Beschreibung der Erfindung, der Figurenbeschreibung und/oder der Bezugszeichenliste, ein Merkmal oder eine Mehrzahl von Merkmalen in der Beschreibung der Erfindung und/oder der Figurenbeschreibung zu ersetzen. Ferner kann dadurch ein Merkmal oder können eine Mehrzahl von Merkmalen in den Patentansprüchen ausgelegt, näher spezifiziert und/oder substituiert werden. - In den Figuren (Fig.) der Zeichnung zeigen:
- Fig. 1: eine dreidimensionale Explosionsansicht einer Ausführungsform einer erfindungsgemäßen Kupplungsbaugruppe mit einer Ausführungsform einer erfindungsgemäßen Lamellenscheibe;
- Fig. 2: eine dreidimensionale teilweise explodierte Ansicht der Lamellenscheibe aus Fig. 1, mit einer Vielzahl von in Radialrichtung beweglichen Kraftübertragungselementen
- Fig. 3: eine dreidimensionale Explosionsansicht der Lamellenscheibe aus Fig. 2 mit zwei Trägerplatten, der Vielzahl von Kraftübertragungselementen und einer Vielzahl von Energiespeichern;
- Fig. 4: einen axialen, radial innen weggebrochenen Halbschnitt der erfindungsgemäßen Kupplungsbaugruppe aus Fig. 1 in einem ausgerückten Zustand der Kupplungsbaugruppe;
- Fig. 5: in einem radial innen und tangential beidseitig weggebrochenen radialen Halbschnitt ein Detail der Kupplungsbaugruppe zwischen der Lamellenscheibe aus Fig. 2 und einem Lamellenhalter im ausgerückten Zustand;
- Fig. 6: einen axialen, radial innen weggebrochenen Halbschnitt der erfindungsgemäßen Kupplungsbaugruppe aus Fig. 1 in einem eingerückten Zustand der Kupplungsbaugruppe;
- Fig. 7: in einem radial innen und tangential beidseitig weggebrochenen radialen Halbschnitt ein Detail der Kupplungsbaugruppe zwischen der Lamellenscheibe aus Fig. 2 und dem Lamellenhalter im eingerückten Zustand;
- Fig. 8: eine teilweise freigeschnittene, zweidimensionale axiale Stirnseitenansicht der erfindungsgemäßen Kupplungsbaugruppe, wobei die Kupplungsbaugruppe im ausgerückten Zustand dargestellt ist; und
- Fig. 9: ebenfalls eine teilweise freigeschnittene, zweidimensionale axiale Stirnseitenansicht der erfindungsgemäßen Kupplungsbaugruppe, wobei die Kupplungsbaugruppe im eingerückten Zustand dargestellt ist.

Die Erfindung - eine Kupplungsbaugruppe 1 - ist im Folgenden anhand von Ausführungsbeispielen einer Ausführungsform einer Variante der Kupplungsbaugruppe 1 für eine Drehmomentübertragungseinrichtung 0 für ein Fahrzeug, insbesondere für einen Antriebsstrang eines Kraft- oder Nutzfahrzeugs, näher erläutert. Die Erfindung ist jedoch nicht auf diese Variante, die dargestellte Ausführungsform und/oder die nachfolgend erläuterten Ausführungsbeispiele beschränkt, sondern ist von grundlegenderer Natur, sodass sie auf sämtliche Kupplungen im Sinne der Erfindung angewendet werden kann. - Obwohl die Erfindung im Detail durch bevorzugte Ausführungsbeispiele näher beschrieben und illustriert ist, so ist die Erfindung durch diese offenbarten Beispiele nicht eingeschränkt. Andere Variationen können hieraus abgeleitet werden, ohne den Schutzumfang der Erfindung zu verlassen.

Die Erläuterung der Erfindung bezieht sich im Folgenden auf eine Axialrichtung Ax, eine Rotationsachse Ax, eine Radialrichtung Ra und eine Umfangsrichtung Um der erfindungsgemäßen Drehmomentübertragungseinrichtung 0, einer erfindungsgemäßen Kupplung 0, der erfindungsgemäßen Kupplungsbaugruppe 1 mit ihren Lamellenhaltern 10, 20 und Lamellenscheiben 12, 22. Diese Lageangaben beziehen sich ggf. z. B. auch auf eine Kurbelwelle eines Verbrennungsmotors, den Antriebsstrang des Kraftfahrzeugs, ein Getriebe 0, einen Wandler 0, ein Differenzial 0 etc. Die Kupplung 0 bzw. die Kupplungsbaugruppe 1 ist dabei als eine Lamellenkupplung 0 bzw. eine Lamellenkupplungsbaugruppe 1 ausgebildet. - Bevorzugt findet die Erfindung Anwendung auf eine nass laufende Kupplung 0 ggf. mit einem Dämpfer und/oder einem Tilger (beides nicht dargestellt). Die Erfindung kann jedoch auch auf andere Kupplungen 1, wie z. B. eine Mehrfach-, Einfach- oder Teilkupplung, mit einer radialen und/oder axialen Anordnung von Kupplungsbaugruppen oder angewendet werden.

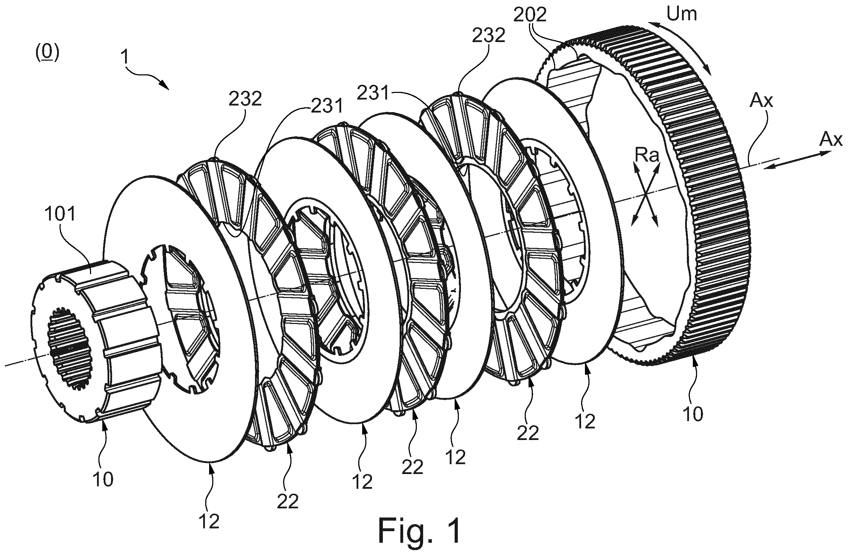

Ein charakteristisches Merkmal einer erfindungsgemäßen (Reib-)Lamellenkupplung 0 bzw. (Reib-)Lamellenkupplungsbaugruppe 1 (vgl. auch die Fig. 1, 4, 6, 8 und 9) im Vergleich mit anderen Kupplungsbaugruppen ist eine Ausbildung von Lamellenscheiben 22, insbesondre Außenlamellenscheiben 22, wobei im einrückten Zustand wie im Stand der Technik eine (degressive) Axialkraft F_{Ax} (entspricht im Wesentlichen einer Aktuierungskraft F_{Ax} der Kupplungsbaugruppe 1) auf die Reibpaarungen aller Lamellenscheiben 12, 22 einwirkt. - Eine Lamellenkupplung 0 ist unter Last schaltbar und wird häufig angewendet, weil sie kompakt und preisgünstig ist. Oft ist diese in Öl laufend und z. B. in Automatikgetrieben, in hochbelasteten Haupt-/ Anfahrkupplungen oder in (Sperr-)Differenzialen im Einsatz. In Baumaschinenachsen werden Lamellenkupplungen z. B. auch als Betriebs- und/oder Parkbremsen angewendet, letzteres häufig in Form einer Federspeicherbremse.

Die Vorteile einer nass laufbaren oder nass laufenden Lamellenkupplung 0 liegen in einer höheren Leistungs- und Energieaufnahme im Gegensatz zu Trockenkupplungen, da diese mit Öl gekühlt ist. Nachteile sind niedrigere Reibungskoeffizienten gegenüber Trockenkupplungen und ein höheres Schleppmoment im Leerlauf aufgrund von Flüssigkeitsreibung zwischen den Lamellen. Eine Lamellenkupplung 0 weist wenigstens eine Innen- 12 und eine Außenlamelle 22 auf. Die Innenlamellen 12 sind über einen Innenlamellenhalter 10 oder -träger 10 mit einer Welle, z. B. einer Getriebeeingangswelle, verzahnt, und die Außenlamellen 12 sind in/an einem innenverzahnten, rohrförmigen Außenlamellenhalter 20 bzw. -träger 20 aufgenommen. Um ein zu übertragendes Drehmoment M zu erhöhen, sind eine Vielzahl von Innen- 12 und Außenlamellen 22 einander abwechselnd axial angeordnet, sodass bei gleicher Aktuierungskraft F_{Ax} durch eine erhöhte Reibbelagfläche ein höheres Drehmoment M übertragbar ist.

In der Praxis ist eine Anzahl der Lamellen 12, 22 jedoch auf zehn bis zwanzig begrenzt, da bei einem dynamischen Einkuppeln die Lamellen 12, 22 axial zusammengeschoben werden und sich jede Lamelle 12, 22 gegenüber ihrer Führung verschieben muss. Dadurch wird ein Teil der Aktuierungskraft F_{Ax} nicht an eine jeweils benachbarte Lamelle 12, 22 weitergegeben, sondern zum Teil am betreffenden Lamellenträger 10, 20 abgestützt. Das Reibmoment, das jede einzelne Lamelle 12/22 überträgt, fällt dadurch in Einleitungsrichtung der Aktuierungskraft F_{Ax} von einer ersten 12/22 zur letzten Lamelle 12/22 degressiv ab. D. h. eine Drehmomentkapazität der Lamellenkupplung 1 kann nur bis zu einem gewissen Punkt über die Anzahl der Lamellen 12, 22 gesteigert werden, danach sind höhere Aktuierungskräfte F_{Ax} notwendig, was mit größeren Durchmessern der Lamellen 12, 22 und somit einer vergrößerten und umkonstruierten Kupplung 0 einhergeht.

Ziel der Erfindung ist es eine Drehmomentkapazität einer Lamellenkupplungseinrichtung mit limitierter Größe und somit auch limitierter Anzahl und beschränkten Durchmessern der Lamellen 12, 22 zu erhöhen. Hierbei soll gegenüber Lamellenkupplungen aus dem Stand der Technik, eine Lamellenkupplungseinrichtung 1 mit einer deutlich höheren Leistungsdichte angegeben werden. Angestrebt ist ein Faktor von wenigstens zwei. - Der erfindungsgemäßen Konstruktion der Lamellenkupplungseinrichtung 1 - nachfolgend als Kupplungseinrichtung 1 bezeichnet - liegt die Idee Zugrunde, die Reibkräfte der Kupplung 1 nicht nur axial zwischen den Lamellen 12, 22 aufzubauen, sondern auch an einem Umfang Um der Kupplungsbaugruppe 1, wobei sich die erfindungsgemäße Kupplungsbaugruppe 1 selbstverstärkend verhält. Wählt man als eine Analogie eine Trommel- und Scheibenbremse, so stellt die erfindungsgemäße Kupplungseinrichtung 1 eine Kombination aus diesen beiden Bremsen dar.

Die Fig. 1 zeigt eine Explosionsansicht einer beispielhaften Ausführungsform einer erfindungsgemäßen Kupplungsbaugruppe 1 für eine Drehmomentübertragungseinrichtung 0 bzw. eine Kupplung 0, mit einem als einen Innenring 10 ausgebildeten (Innen-) Lamellenhalter 10 bzw. -träger 10, einem als einen Außenring 20 ausgebildeten (Außen-)Lamellenhalter 20 bzw. -träger 20 und einer in Radialrichtung Ra dazwischen aufgenommenen als Lamellenpaket 2 ausgebildeten Reibeinrichtung 2 mit jeweils einer Mehrzahl von als Innen- 12 und Außenlamellen 22 ausgebildeten Lamellenscheiben 12, 22. Der Innenring 10 kann hierbei auch als eine Nabe 10 oder ein Abschnitt einer Welle, z. B. einer Getriebewelle, etc. sowie der Außenring 20 ggf. anders ausgebildet sein.

Hierbei sind die Innenlamellen 12 auf dem Innenlamellenhalter 10 sitzend axial verschieblich vorgesehen und drehfest mit dem Innenlamellenhalter 10 bevorzugt über eine Verzahnung verbunden, wobei bevorzugt kein oder lediglich nur ein geringes Lüftspiel in Umfangsrichtung Um zwischen der jeweiligen Innenlamellen 12 und dem Innenlamellenhalter 10 vorgesehen ist. - In Bezug auf die Außenlamellen 22 ist dies jedoch nicht so. Hier ist eine gewisse, gewollte Verdrehbarkeit der Außenlamellen 22 bezüglich des Außenlamellenhalters 20 gegeben, was einer betreffenden Geometrie bzw. Konfiguration der Außenlamellen 12 und des Außenlamellenhalters 20 geschuldet ist. D. h. die Außenlamellen 22 sind in den Außenlamellenhalter 20 axial verschieblich eingehängt, aber lediglich hauptsächlich oder im Wesentlichen drehfest mit dem Außenlamellenhalter 20 verbunden.

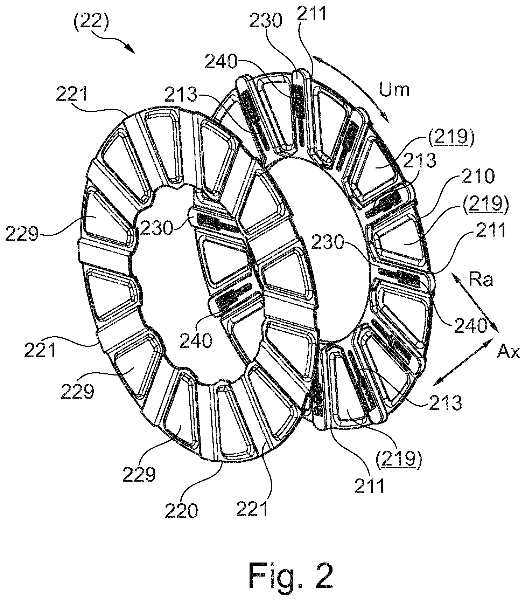

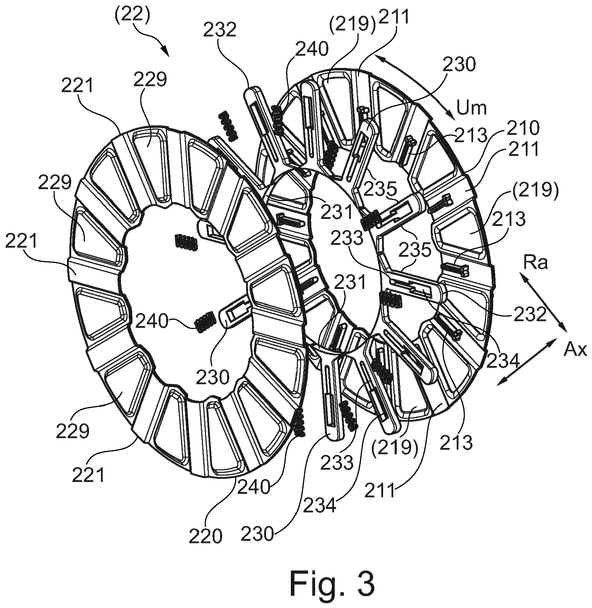

Eine einzelne Außenlamelle 22, siehe die Fig. 2 und 3, ist gemäß der Erfindung als eine gebaute Außenlamelle 22 ausgebildet, wobei die Außenlamelle 22 wenigstens eine Trägerplatte 210/220 und eine Mehrzahl von in der Außenlamelle 22 lediglich in Radialrichtung Ra beweglich vorgesehenen Kraftübertragungselementen 230 aufweist. Die Kraftübertragungselemente 230 können z. B. auch als (Ver-)Klemm- 230 oder Keilübertragungselemente 230 bezeichnet sein. Bevorzugt weist eine einzelne Außenlamelle 22 zwei Trägerplatten 210, 220 und dazwischen vorgesehen und in Umfangrichtung Um bevorzug regelmäßig verteilt angeordnet die Kraftübertragungselemente 230 auf. Die Kraftübertragungselemente 230 sind im vorliegenden Ausführungsbeispiel nach radial außen mechanisch vorgespannt (siehe unten die Energiespeicher 240), wobei sich bei einer nach innen gerichteten Radialkraft auf ein einzelnes Kraftübertragungselement 230, dieses nach radial innen bewegen kann.

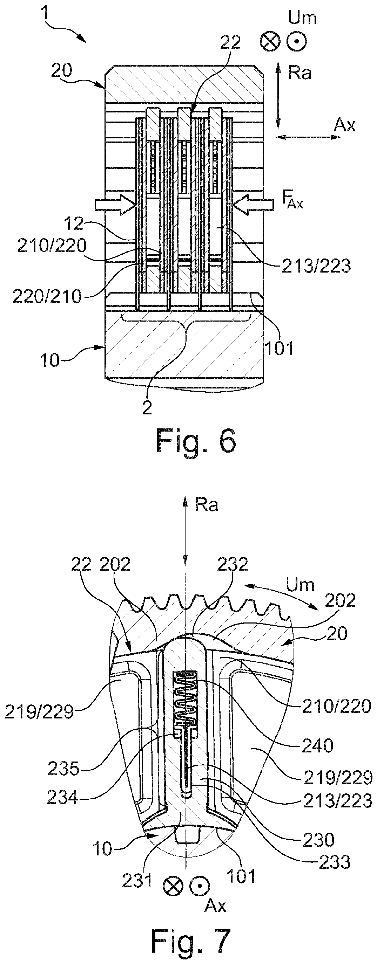

Ein einzelnes Kraftübertragungselement 230 umfasst einen mittleren Lagerabschnitt 235, der (außen) im Wesentlichen quader- oder zungenförmig mit im Wesentlichen parallelen Kanten ausgebildet ist. - Radial innen weist ein einzelnes Kraftübertragungselement 230 einen inneren Angriffsabschnitt 231 für ein Inangriffbringen des Kraftübertragungselements 230 mit dem Innenlamellenhalter 10 auf. Dies ist vorliegend ein Innenabschnitt 231 des Kraftübertragungselements 230 mit z. B. einem negativem Kreissegment als Innenkontur, welcher z. B. an einen Polschuh erinnert, jedoch für einen mechanischen Reibkontakt des Kraftübertragungselements 230 mit dem Innenlamellenhalter 10 ausgebildet (siehe die Fig. 6 und 7). Der innere Angriffsabschnitt 231 ist an einer bevorzugt in erster Näherung als eine äußere Zylinderoberfläche ausgebildeten Oberfläche des Innenlamellenhalters 10 reibbehaftet angreifbar.

Radial außen weist ein einzelnes Kraftübertragungselement 230 einen äußeren Angriffsabschnitt 232 für ein Inangriffbringen des Kraftübertragungselements 230 mit dem Außenlamellenhalter 20 auf. Dies ist vorliegend ein Außenabschnitt 232 des Kraftübertragungselements 230 mit z. B. einem positiven Kreissegment als Außenkontur. Ferner dient der äußere Angriffsabschnitt 232 der axial verschieblichen und der hauptsächlichen oder im Wesentlichen drehfesten Verbindung mit dem Außenlamellenhalter 20. - D. h. die in den Außenlamellenhalter 20 eingehängten Außenlamellen 22 sind gegenüber dem Außenlamellenhalter 20 in Umfangrichtung Um um einen gewissen Umfangswinkel verdrehbar vorgesehen. Eine maximale gegenseitige Verdrehbarkeit hängt im Wesentlichen von einer Geometrie der Ausnehmungen 202 (siehe unten) im Außenlamellenhalter 20, einer Geometrie der Angriffsabschnitte 232 der Kraftübertragungselemente 230 der Außenlamellen 22 und radialen Federkräften auf die Kraftübertragungselemente 230 ab.

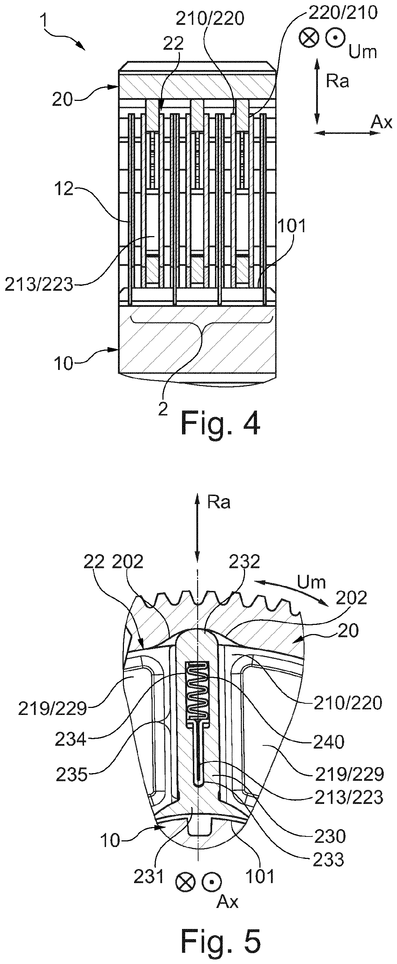

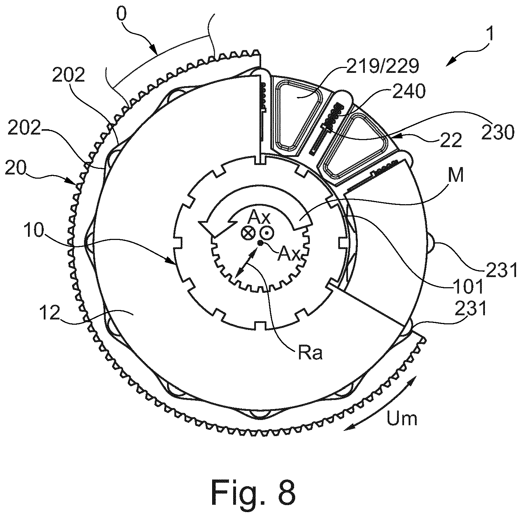

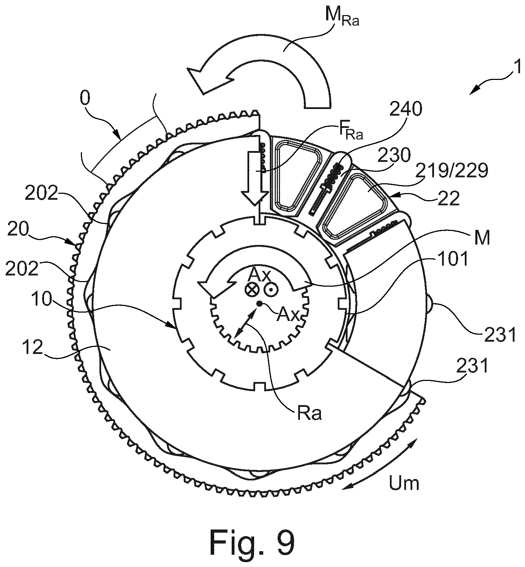

Eine einzelne Außenlamelle 22 ist derart ausgebildet, dass die Angriffsabschnitte 232 ihrer Kraftübertragungselemente 230 an einem Außenumfang ihrer Trägerplatten 210, 220 nach außen abstehen, wobei die Umfangsabstände direkt benachbarter Angriffsabschnitte 232 bevorzugt im Wesentlichen gleich groß sind. Für eine Montage der betreffenden Außenlamelle 22 im Außenlamellenhalter 20, weist der Außenlamellenhalter 20 innen an seiner in erster Näherung hohlzylindrischen Innenseite in Axialrichtung Ax der Kupplungsbaugruppe 1 verlaufende Ausnehmungen 202 bzw. Vertiefungen 202 derart auf, dass in diese Ausnehmungen 202 die Angriffsabschnitte 232 der Kraftübertragungselemente 230 bevorzugt abschnittsweise formschlüssig einsetzbar bzw. eingreifbar sind (siehe insbesondere die Fig. 5 und 8). Hierdurch sind die Außenlamellen 22 innerhalb des Außenlamellenhalters 20 zentriert montierbar, wobei sich die Außenlamellen 22 relativ zum Außenlamellenhalter 20 über einen gewissen kleinen Winkel verdrehen können (siehe insbesondere die Fig. 5 und 8 im Vergleich mit den die Fig. 7 und 9).

Zur Führung eines Kraftübertragungselements 230 weist wenigstens eine Trägerplatte 210/220 der Außenlamelle 22 eine bevorzugt als eine Lagerschale 211/221 ausgebildete Lagereinrichtung 211/221 auf, innerhalb welcher das Kraftübertragungselement 230 bzw. dessen Lagerabschnitt 235, ggf. in einem Zusammenspiel mit der zweiten Trägerplatte 220/210 in Radialrichtung Ra zwangsgeführt ist. D. h. die wenigstens eine Lagereinrichtung 211/221 der wenigstens einen Trägerplatte 210/220 lagert das Kraftübertragungselement 230 in beide Umfangsrichtungen Um und in wenigstens eine Axialrichtung Ax, wobei eine Lagerung in eine zweite Axialrichtung Ax bevorzugt von der zweiten Trägerplatte 220/210 übernommen wird. Hierfür besitzen im Wesentlichen alle Außenquerschnitte des Lagerabschnitts 235 des Kraftübertragungselements 230 im Wesentlichen identische Querschnitte, wobei die zusammengesetzten Querschnitte zweier betreffender Lagereinrichtungen 211, 221 dazu geringfügig größere komplementäre Querschnitte zur Führung ausbilden.

Ferner kann zur Führung eines Kraftübertragungselements 230 die Lagereinrichtung 211/221 wenigstens einer Trägerplatte 210/220 eine (Radial-)Führungseinrichtung 213/223 aufweisen, welche z. B. als ein Führungselement 213/223 (siehe die Fig. 3, 5 und 7) innen an der Lagereinrichtung 211/221 oder als eine Führungsausnehmung (nicht dargestellt) in der Lagereinrichtung 211/221 ausgebildet ist. Das Kraftübertragungselement 230 weist eine dazu komplementäre Führungseinrichtung 233 auf, die z. B. gemäß obigem erstem Fall als eine Führungsausnehmung 233 (siehe wiederum die Fig. 3, 5 und 7) und gemäß obigem zweiten Fall als ein Führungselement (wiederum nicht dargestellt) ausgebildet ist. Bevorzugt ist das Führungselement 213/223 als ein geradliniger Radialsteg 213/223 ausgebildet.

Ein einzelnes Kraftübertragungselement 230 sowie dessen betreffende Lagereinrichtung(en) 211/ 221; 211, 221 und dessen betreffende Führungseinrichtung(en) 213/ 223, 233; 213, 223, 233 sind im Wesentlichen parallel zueinander angeordnet und verlaufen hauptsächlich oder im Wesentlichen in Radialrichtung Ra in der Außenlamelle 22. - Für eine mechanische Vorspannung des Kraftübertragungselements 230 ist zwischen dem Kraftübertragungselement 230 und der Außenlamelle 22 bzw. einer Trägerplatte 210/220 oder beiden Trägerplatten 210, 220 ein Energiespeicher 240 eingerichtet, welcher das Kraftübertragungselement 230 in der Außenlamelle 22 nach radial außen mechanisch vorspannt. Bevorzugt ist der Energiespeicher 240 als ein vergleichsweise flaches (Druck- (bevorzugt) oder Zug-)Federelement 240 ausgebildet, welches z. B. mehrfach s-förmig oder schlangenförmig ausgebildet ist.

Der bevorzugt als Druckfederelement 240 ausgebildete Energiespeicher 240 kann in einem (Feder-)Fenster 234 des Kraftübertragungselements 230 eingerichtet sein, wobei sich das Fenster 234 bevorzugt an die Führungseinrichtung 233 radial, insbesondre radial außen anschließt. In einer Montageposition sitzt dann der Energiespeicher 240 einerseits innen im Fenster 234 am Kraftübertragungselement 230 und andererseits innen im Fenster 234 an der Führungseinrichtung 213/223 der Lagereinrichtung 211/221 an, welche bevorzugt in das Fenster 234 hineinragt (siehe die Fig. 5 und 7) und dort bevorzugt einen Anschlag einerseits für den Energiespeicher 240 und andererseits ggf. für das Kraftübertragungselement 230 aufweist. - An einer Trägerplatte 210/220 wechseln sich in eine Umfangsrichtung Um betrachtet deren innere Lagereinrichtungen 211 mit deren äußeren Reibbelägen 219/229 bzw. Reibelementen 219/229 bzw. Reibflächen 219/229 ab, wobei vorliegend je Trägerplatte 210, 220 zwölf Lagereinrichtungen 211 und zwölf Reibbeläge/-flächen 219/229 vorgesehen sind. Bevorzugt sind beide Trägerplatten 210, 220 im Wesentlichen identisch aufgebaut.

Im Folgenden wird kurz eine Funktion der erfindungsgemäßen Kupplungsbaugruppe 1 erläutert. - Im ausgerückten Zustand der Kupplungsbaugruppe 1 (siehe die Fig. 4, 5 und 8) wirkt keine Axialkraft F_{Ax} zwischen den Lamellenscheiben 12, 22 bzw. im Lamellenpaket 2 zur Übertragung eines Drehmoments M; M_{Ax}, M_{Ra}; M_{Ra} durch die Kupplungsbaugruppe 1. Lediglich die Energiespeicher 240 der Außenlamellen 22 zentrieren die Außenlamellen 22 im Außenlamellenhalter 20 und üben vergleichsweise geringe, nach außen gerichtete Radialkräfte innen auf den Außenlamellenhalter 20 in dessen Ausnehmungen 202 auf. Die betreffenden äußeren Angriffsabschnitte 232 der Kraftübertragungselemente 230 greifen mittig in die betreffenden Ausnehmungen 202 ein. Der Innenlamellenhalter 10 mit seinen Innenlamellen 12 kann frei gegenüber dem Außenlamellenhalter 20 mit seinen Außenlamellen 22 rotieren.

Greift nun eine Axialkraft F_{Ax} zwischen den Lamellenscheiben 12, 22 bzw. im Lamellenpaket 2 zur Übertragung des Drehmoments M; M_{Ax}, M_{Ra}; M_{Ra} (siehe die Fig. 6, 7 und 9) an, so üben die Innenlamellen 12 aufgrund eines beginnenden Reibkontakts mit den Außenlamellen 22 eine Umfangskraft auf die Außenlamellen 22 auf, welche ihrerseits die Umfangskraft auf den Außenlamellenhalter 20 übertragen, wobei sich die Außenlamellen 22 relativ gegenüber dem Außenlamellenhalter 20 etwas verdrehen. Hierdurch verlagern sich die äußeren Angriffsabschnitte 232 der Kraftübertragungselemente 230 in Umfangsrichtung Um innerhalb ihren Ausnehmungen 202, wie es am Besten in der Fig. 7 zu sehen ist. Die äußeren Angriffsabschnitte 232 verlagern ihrerseits aufgrund einer Ausgestaltung der Ausnehmungen 202 die Kraftübertragungselemente 230 nach radial innen.

Die jeweilige Ausnehmung 202 ist derart gestaltet, dass ihr vergleichsweise breiter, u- oder v-förmige Radialquerschnitt (Fig. 7) von einem tiefsten Punkt der Ausnehmung 202, also in Umfangsrichtung Um in Bezug auf die jeweilige Ausnehmung 202 mittig, sich kontinuierlich immer mehr einem Innendurchmesser des Außenlamellenhalters 20 anpasst. D. h., einmal von einer Position einer diametral ggf. gegenüberliegenden Ausnehmung abgesehen, nimmt in diesem Bereich ein Innendurchmesser des Außenlamellenhalters 20 ab. Solche Bereiche werden bei der Beaufschlagung der Kupplungsbaugruppe 1 mit der Axialkraft F_{Ax} vom jeweilig äußeren Angriffsabschnitt 232 des jeweiligen Kraftübertragungselements 230 abgetastet, welcher seinerseits das Kraftübertragungselement 230 nach radial innen verlagert, bis der betreffende dem jeweilig äußeren Angriffsabschnitt 232 radial gegenüberliegende innere Angriffsabschnitt 231 des jeweiligen Kraftübertragungselements 230 radial innen in der Kupplungsbaugruppe 1 am Innenlamellenhalter 10 außen angreift.

Hierdurch wird eine radiale Klemmkraft F_{Ra} bzw. eine Radialkraft F_{Ra} (siehe Fig. 9) über die Kraftübertragungselemente 230 hauptsächlich oder im Wesentlichen sämtlicher Außenlamellen 22 zwischen den Lamellenhaltern 10, 20 eingerichtet, wodurch die Lamellenhalter 12, 20 in Drehrichtung des Innenlamellenhalters 10 fest aneinander gekoppelt sind. Mittels der Kupplungsbaugruppe 1 wird dann ein Drehmoment M (M = M_{Ra} oder M = M_{Ax} + M_{Ra}) vom Lamellenhalter 10 auf den Lamellenhalter 20 übertragen. Hierbei verhält sich die Kupplungsbaugruppe 1 selbstverstärkend, d. h. erhöht sich das Drehmoment des Innenlamellenhalters 10, so erhöht sich auch die Radialkraft F_{Ra} zwischen den Lamellenhaltern 12, 20.

Die Kupplungsbaugruppe 1 kann derart ausgebildet sein, dass neben einem übertragbaren bzw. zu übertragenden (Teil-)Drehmoment M_{Ra}, welches ausschließlich über die Kraftübertragungselemente 230 der Außenlamellen 22 übertragbar ist bzw. übertragen wird, ferner ein übertragbares bzw. zu übertragendes (Teil-)Drehmoment M_{Ax}, übertragbar ist bzw. übertragen wird. Dieses Drehmoment M_{Ax} kann z. B. mittels einer herkömmlichen Außenlamelle (nicht dargestellt) übertragen werden, welche ggf. ebenfalls in die Ausnehmungen 202 eingesetzt sind bzw. in diese eingreifen und keine Kraftübertragungselemente 230 aufweist. D. h. mittels einer solchen Außenlamelle ist die Kupplungsbaugruppe 1 teilweise wie ein herkömmliche Kupplungsbaugruppe 1 ausgebildet.

Gemäß der Erfindung ist es natürlich möglich, das oben Beschriebene kinematisch ggf. mehrfach umzukehren. So ist es z. B. möglich, den Momentenübertrag von einem Außenlamellenhalter zu einem Innenlamellenhalter vorzusehen und/oder eine mechanische Vorspannung der Kraftübertragungselemente umzukehren. Dementsprechend verändern sich die beteiligten Rotations-Bauteile bzw. -gruppen. - Die erfindungsgemäße Kupplungsbaugruppe 1 eröffnet die Möglichkeit, die Aktuierungskräfte bei gleicher Drehmomentkapazität zu verringern oder ein übertragbares Maximalmoment bei gleicher Aktuierungskraft deutlich zu erhöhen.

Zudem eröffnet sich die Möglichkeit, die Anzahl der Lamellen zu verringern und dadurch Verluste durch Schleppmomente gegenüber einer herkömmlichen Kupplungsbaugruppe zu reduzieren. D. h. gemäß der Erfindung ist eine kompakte, sicher betreibbare Kupplungsbaugruppe 1 mit einem geringen axialen und radialen Bauraumverbrauch bei einer effizienten Leistungsübertragung angegeben. Die Erfindung lehrt ferner eine neuartige, nass laufbare Lamellenkupplung 0 mit einer hohen Leistungsdichte. Durch die Verwendung einer neuen Geometrie, kann die Leistungsdichte um mehr als den Faktor zwei angehoben werden. Die erfindungsgemäße Lamellenkupplung 0 ist ferner kostengünstig in ihrer Montage, ihrem Betrieb und ihrer Wartung.

### Bezugszeichenliste

- 0: Drehmomentübertragungseinrichtung für ein Fahrzeug, insbesondere einen Antriebsstrang eines Kraftfahrzeugs (Personenkraftwagen, Personentransportwagen, ATV (All Terrain Vehicle, Geländefahrzeug), Kraftrad, Trike, Quad, Nutzfahrzeug, (Schwerst-)Lastkraftwagen, Baufahrzeug, Baumaschine, Sonderfahrzeug, Schienenfahrzeug etc., mit Verbrennungsmotor, z. B. Benzin-/Dieselmotor und/oder Elektromotor) - z. B.: (Drehmoment-)Wandler, (Stufenlos-/Automatik-/ Schalt-)Getriebe, (Mehrfach-/Doppel-/Einfach-)Kupplungsgetriebe, (axiale/ radiale) (nass/trocken laufende) (Mehrfach-/Doppel-/Einfach- / Reib-/Lamellen-/ Mehr-/Zwei-/Einscheiben-) (Haupt-/Lastschalt-/Anfahr-/Wandler-/Teil-)Kupp-lung, (Achs-/Zentral-/Mitten-/Längs-) (Sperr-)Differenzial, (hydrodynamischer) (Betriebs-/Feststell-/Park-/Federspeicher-)Bremse, und/oder Zweimassenwandler/-schwungrad, mit (mehr-/zwei-/einstufigem) (mehr-/zwei-/einreihigem)(Mehrfach-/Doppel-/Einfach-) Dämpfer(-einrichtung), z. B. Torsionsschwingungsdämpfer, und/oder ggf. mit (Einfach-/Doppel-/Mehrfach-)Tilger(-einrichtung), z. B. (Parallel-/Trapez-)Fliehkraftpendel; oder Baugruppe, Kombination davon
- 1: (Keil-/Teil-)Kupplungsbaugruppe der Drehmomentübertragungseinrichtung 0 bzw. der Kupplung 0, (Rotations-)Baugruppe
- 2: Reibeinrichtung, Lamellenpaket mit Innen- 12 und Außenlamellen 12, 22 der Kupplungsbaugruppe 1, (Rotations-)Baugruppe
- 10: (innerer/äußerer, erster/zweiter) Lamellenhalter/-träger, axial verschieblich und drehfest mit der Lamellenscheibe 12 verbunden, z. B.: Innenring, Nabe, Innenlamellenhalter/-träger, Abschnitt einer (Getriebe-)Welle (aber auch: Außenring, Außenlamellenhalter/-träger möglich), (Rotations-) Bauteil/-gruppe
- 12: (erste/zweite) Lamellenscheibe, axial verschieblich und drehfest mit dem Lamellenhalter 10 verbunden, z. B.: Innenlamelle(-nscheibe) (aber: auch Verklemmscheibe, Außenlamelle(-nscheibe) möglich), (Rotations-)Bauteil/-gruppe
- 20: (äußerer/innerer, zweiter/erster) Lamellenhalter/-träger, axial verschieblich und im Wesentlichen drehfest mit der Lamellenscheibe 22 verbunden, z. B.: Außenring, Außenlamellenhalter/-träger (aber auch: Innenring, Nabe, Innenlamellenhalter/-träger, Abschnitt einer (Getriebe-)Welle möglich), (Rotations-)Bauteil/-gruppe
- 22: (zweite/erste) Lamellenscheibe, Verklemmscheibe, axial verschieblich gegenüber und hauptsächlich oder im Wesentlichen drehfest mit dem Lamellenhalter 20 verbunden, z. B.: Außenlamelle(-nscheibe) (aber auch: Innenlamelle(-nscheibe) möglich), (Rotations-)Baugruppe/-gruppe
- 101: Abschnitt des Lamellenhalters 10 für Angriff des Angriffsabschnitts 231, bevorzugt im Wesentlichen äußere Zylinderoberfläche (in erster Näherung) (aber auch: Ausnehmung/Vertiefung)
- 202: Abschnitt des Lamellenhalters 20 für Angriff des Angriffsabschnitts 232, bevorzugt Ausnehmung/Vertiefung (aber auch: innere Hohlzylinderoberfläche (in erster Näherung))
- 210: (erste) (Träger-)Platte der Lamellenscheibe 22
- 211: Lagereinrichtung/-schale für das Kraftübertragungselement 230 (ggf. in lediglich der Trägerplatte 210 der Lamellenscheibe 22)
- 213: (Radial-)Führungseinrichtung/-element/-ausnehmung (ggf. einzige je Lagereinrichtung 211/221), z. B. geradliniger Radialsteg
- 219: Reibbelag/-element/-fläche der Platte 210
- 220: (zweite) (Träger-)Platte der Lamellenscheibe 22
- 221: Lagereinrichtung/-schale für das Kraftübertragungselement 230 (ggf. in lediglich der Trägerplatte 220 einer Lamellenscheibe 22)
- 223: (Radial-)Führungseinrichtung/-element/-ausnehmung (ggf. einzige je Lagereinrichtung 221/211), z. B. geradliniger Radialsteg
- 229: Reibbelag/-element/-fläche der Platte 220
- 230: Kraft-/(Ver-)Klemm-/Keilübertragungselement im Wesentlichen lediglich in Radialrichtung Ra beweglich in der Lamellenscheibe 22 eingerichtet
- 231: (innerer) Angriffsabschnitt für Inangriffbringen des Kraftübertragungselements 230 mit dem Lamellenhalter 10, z. B. Abschnitt des Kraftübertragungselements 230 mit z. B. negativem Kreissegment (als Innenkontur)
- 232: (äußerer) Angriffsabschnitt für Inangriffbringen des Kraftübertragungselements 230 mit dem Lamellenhalter 20, z. B. Abschnitt des Kraftübertragungselements 230 mit positivem Kreissegment (als Außenkontur)
- 233: Führungseinrichtung/-ausnehmung/-element für Führungseinrichtung 213/223; 213, 223
- 234: (Feder-)Fenster für Energiespeicher 240
- 235: (mittlerer) Lagerabschnitt des Kraftübertragungselements 230, außen im Wesentlichen quader- oder zungenförmig mit im Wesentlichen parallelen Kanten ausgebildet
- 240: Energiespeicher(-element), insbesondere (Druck-/Zug-)Federelement, bevorzugt (mehrfach) s-förmig oder schlangenförmig
- Ax: Axialrichtung, Längsrichtung, Rotationsachse der Kurbelwelle, des Antriebsstrangs, der Drehmomentübertragungseinrichtung 0, der Kupplung 0, der Kupplungsbaugruppe 1, des Lamellenhalters 10, 20, der Lamellenscheibe 12, 22 etc., axial, Axialebene
- Ra: Radialrichtung der Kurbelwelle, des Antriebsstrangs, der Drehmomentübertragungseinrichtung 0, der Kupplung 0, der Kupplungsbaugruppe 1, des Lamellenhalters 10, 20, der Lamellenscheibe 12, 22 etc., radial, Radialebene
- Um: Umfangsrichtung, Umfang der Kurbelwelle, des Antriebsstrangs, der Drehmomentübertragungseinrichtung 0, der Kupplung 0, der Kupplungsbaugruppe 1, des Lamellenhalters 10, 20, der Lamellenscheibe 12, 22 etc., (Relativ-)Drehbewegungen bzw. Rotationsbewegungen finden im Umfangsrichtung Um statt, tangential, Tangentialebene
- F_{Ax}: Axialkraft zwischen den Lamellenscheiben 12, 22 zur Übertragung des Drehmoments M; M_{Ra}; M_{Ax}, M_{Ra}, entspricht im Wesentlichen der Aktuierungskraft der Kupplungsbaugruppe 1 (abgesehen von Degression)
- F_{Ra}: Radialkraft, Klemmkraft aufgrund anfänglicher Relativdrehung zwischen den Lamellenscheiben 12, 22 und dem jeweils zugehörigen Lamellenhalter 12, 20 aufgrund sich aufbauender Axialkraft F_{Ax} und den Kraftübertragungselementen 230 zur Übertragung des Teildrehmoments M_{Ra}
- M: übertragbares Drehmoment (M = M_{Ax} + M_{Ra} oder M = M_{Ra})
- M_{Ax}: übertragbares bzw. zu übertragendes (Teil-)Drehmoment durch die Kupplungsbaugruppe 1 hindurch aufgrund Axialkraft F_{Ax}
- M_{Ra}: übertragbares bzw. zu übertragendes (Teil-)Drehmoment durch die Kupplungsbaugruppe 1 hindurch aufgrund Radialkraft F_{Ra} (aufgrund Axialkraft F_{Ax})

## Patentansprüche

1. Kupplungsbaugruppe (1) für eine Kupplung (0), ein Getriebe (0) oder ein Differenzial (0) eines Antriebsstrangs eines Fahrzeugs, mit Lamellenscheiben (12, 22) zur Übertragung eines Drehmoments (M) aufgrund einer Axialkraft (F_{Ax}) auf die Lamellenscheiben (12, 22), **dadurch gekennzeichnet, dass** wenigstens eine Lamellenscheibe (22) in Radialrichtung (Ra) der Kupplungsbaugruppe (1) bewegbare Kraftübertragungselemente (230) aufweist, wobei mittels der Kraftübertragungselemente (230) eine Radialkraft (F_{Ra}) innerhalb der Kupplungsbaugruppe (1) einrichtbar ist, und mittels der Kraftübertragungselemente (230) ein Drehmoment (M_{Ra}) innerhalb der Kupplungsbaugruppe (1) übertragbar ist.

2. Kupplungsbaugruppe (1) gemäß Anspruch 1, **dadurch gekennzeichnet, dass** ein Teildrehmoment (M_{Ax}) mittels eines axial einrichtbaren Kraftschlusses zwischen den Lamellenscheiben (12, 22) übertragbar ist.

3. Kupplungsbaugruppe (1) gemäß Anspruch 1 oder 2, **dadurch gekennzeichnet, dass** die Kupplungsbaugruppe (1) zwei Lamellenhalter (10, 20) und für jeweils einen Lamellenhalter (10, 20) jeweils wenigstens eine Lamellenscheibe (12, 22) umfasst, wobei der jeweilige Lamellenhalter (10, 20) mit seiner Lamellenscheibe (12, 22) in Axialrichtung (Ax) der Kupplungsbaugruppe (1) beweglich gelagert und in Umfangsrichtung (Um) der Kupplungsbaugruppe (1) im Wesentlichen drehfest verbunden ist.

4. Kupplungsbaugruppe (1) gemäß Anspruch 3, **dadurch gekennzeichnet, dass** ein Teildrehmoment (M_{Ra}) mittels eines radial einrichtbaren Kraftschlusses zwischen den Lamellenhaltern (10, 20) über die Kraftübertragungselemente (230) übertragbar ist.

5. Kupplungsbaugruppe (1) gemäß einem der Ansprüche 1 bis 4, **dadurch gekennzeichnet, dass** die Kraftübertragungselemente (230) der wenigstens einen Lamellenscheibe (22) derart in der Lamellenscheibe (22) eingerichtet sind, dass bei einer Beaufschlagung eines ersten Lamellenhalters (10/20) mit einem Drehmoment (M) und einer Beaufschlagung der Lamellenscheiben (12, 22) mit einer Axialkraft (Ax), das Drehmoment (M; M_{Ax}, M_{Ra}; M_{Ra}) in den zweiten Lamellenhalter (20/10) einleitbar ist.

6. Kupplungsbaugruppe (1) gemäß einem der Ansprüche 1 bis 5, **dadurch gekennzeichnet, dass** bei der Beaufschlagung der Lamellenscheiben (12, 22) mit der Axialkraft (Ax) die Kraftübertragungselemente (230) einerseits an einem Abschnitt (202) des zweiten Lamellenhalters (20/10) angreifen und fest ansitzen und dabei die Kraftübertragungselemente (230) andererseits an einem Abschnitt (101) des ersten Lamellenhalters (10/20) reibbehaftet angreifen.

7. Kupplungsbaugruppe (1) gemäß einem der Ansprüche 1 bis 6, **dadurch gekennzeichnet, dass** sich bei einem Initiieren der Axialkraft (Ax) auf die Lamellenscheiben (12, 22) die Kraftübertragungselemente (230) nach radial innen oder nach radial außen bewegen und das Drehmoment (M_{Ra}) zwischen den Lamellenhaltern (10, 20) übertragen.

8. Kupplungsbaugruppe (1) gemäß Anspruch 7, **dadurch gekennzeichnet, dass** die Kraftübertragungselemente (230) in Ausnehmungen (202) im zweiten Lamellenhalter (20/10) angreifen und das Drehmoment (M_{Ra}) auf den zweiten Lamellenhalter (20/10) übertragen, oder die Kraftübertragungselemente (230) in Ausnehmungen im ersten Lamellenhalter (10/20) angreifen und das Drehmoment (M_{Ra}) reibbehaftet auf den ersten Lamellenhalter (10/20) übertragen.

9. Kupplungsbaugruppe (1) gemäß einem der Ansprüche 1 bis 8, **dadurch gekennzeichnet, dass**:
• der Innenring (10/20) in erster Näherung als ein Hohlzylinder ausgebildet ist und radial innen bevorzugt eine Verzahnung aufweist;
• der Innenring (10/20) radial außen eine Verzahnung aufweist, mittels welcher die wenigstens eine Innenlamelle (12/22) axial verschieblich und drehfest auf dem Innenring (10/20) montierbar ist;
• der Außenring (20/10) in erster Näherung als ein Hohlzylinder ausgebildet ist und radial außen bevorzugt eine Verzahnung aufweist; und
• der Außenring (20/10) radial innen die in Axialrichtung (Ax) verlaufenden Ausnehmungen (202) aufweist, mittels welcher die wenigstens eine Außenlamelle (22/12) axial verschieblich und hauptsächlich oder im Wesentlichen drehfest im Innenring (20/10) montierbar ist.

## Claims

1. Clutch assembly (1) for a clutch (0), a transmission (0) or a differential (0) of a drive train of a vehicle, having multi-plate discs (12, 22) for the transmission of a torque (M) on account of an axial power (F_{Ax}) on the multi-plate discs (12, 22), **characterized in that** at least one multi-plate disc (22) has power transmission elements (230) which can be moved in the radial direction (Ra) of the clutch assembly (1), it being possible for a radial power (F_{Ra}) to be configured within the clutch assembly (1) by means of the power transmission elements (230), and it being possible for a torque (M_{Ra}) to be transmitted within the clutch assembly (1) by means of the power transmission elements (230).

2. Clutch assembly (1) according to Claim 1, **characterized in that** a partial torque (M_{Ax}) can be transmitted by means of a non-positive connection which can be configured axially between the multi-plate discs (12, 22).

3. Clutch assembly (1) according to Claim 1 or 2, **characterized in that** the clutch assembly (1) comprises two multi-plate holders (10, 20) and in each case at least one multi-plate disc (12, 22) for in each case one multi-plate holder (10, 20), the respective multi-plate holder (10, 20) with its multi-plate disc (12, 22) being mounted such that it can be moved in the axial direction (Ax) of the clutch assembly (1) and being connected in a substantially torque-proof manner in the circumferential direction (Um) of the clutch assembly (1).

4. Clutch assembly (1) according to Claim 3, **characterized in that** a partial torque (M_{Ra}) can be transmitted by means of a non-positive connection which can be established radially between the multi-plate holders (10, 20) via the power transmission elements (230).

5. Clutch assembly (1) according to one of Claims 1 to 4, **characterized in that** the power transmission elements (230) of the at least one multi-plate disc (22) are set up in the multi-plate disc (22) in such a way that, in the case of loading of a first multi-plate holder (10/20) with a torque (M) and loading of the multi-plate discs (12, 22) with an axial power (Ax), the torque (M; M_{Ax}, M_{Ra}; M_{Ra}) can be introduced into the second multi-plate holder (20/10).

6. Clutch assembly (1) according to one of Claims 1 to 5, **characterized in that**, in the case of loading of the multi-plate discs (12, 22) with the axial power (Ax), the power transmission elements (230) act on one side on a section (202) of the second multi-plate holder (20/10) and are seated fixedly, and in the process the power transmission elements (230) act frictionally on the other side on a section (101) of the first multi-plate holder (10/20).

7. Clutch assembly (1) according to one of Claims 1 to 6, **characterized in that**, in the case of an initiation of the axial power (Ax) on the multi-plate discs (12, 22), the power transmission elements (230) move radially to the inside or radially to the outside and transmit the torque (M_{Ra}) between the multi-plate holders (10, 20).

8. Clutch assembly (1) according to Claim 7, **characterized in that** the power transmission elements (230) act in recesses (202) in the second multi-plate holder (20/10) and transmit the torque (M_{Ra}) to the second multi-plate holder (20/10), or the power transmission elements (230) act in recesses in the first multi-plate holder (10/20) and transmit the torque (M_{Ra}) frictionally to the first multi-plate holder (10/20).

9. Clutch assembly (1) according to one of Claims 1 to 8, **characterized in that**:
• the inner ring (10/20) is configured in a first approximation as a hollow cylinder and preferably has a toothing system radially on the inside;
• the inner ring (10/20) has a toothing system radially on the outside, by means of which toothing system the at least one inner multi-plate (12/22) can be mounted in an axially displaceable and torque-proof manner on the inner ring (10/20);
• the outer ring (20/10) is configured in a first approximation as a hollow cylinder and preferably has a toothing system radially on the outside; and
• the outer ring (20/10) has, radially on the inside, the recesses (202) which run in the axial direction (Ax) and by means of which the at least one outer multi-plate (22/12) can be mounted in an axially displaceable and mainly or substantially torque-proof manner in the inner ring (20/10).

## Revendications

1. Ensemble d'embrayage (1) destiné à un embrayage (0), une boîte de vitesse (0) ou un différentiel (0) d'une chaîne cinématique d'un véhicule, l'ensemble d'embrayage comprenant des disques à lamelles (12, 22) destinés à transmettre un couple (M), en raison d'une force axiale (F_{Ax}), aux disques à lamelles (12, 22), **caractérisés en ce qu'**au moins un disque à lamelles (22) comporte des éléments de transmission de force (230) mobiles dans la direction radiale (Ra) de l'ensemble d'embrayage (1), une force radiale (F_{Ra}) pouvant être réglée dans l'ensemble d'embrayage (1) au moyen des éléments de transmission de force (230) et un couple (M_{Ra}) pouvant être transmis dans l'ensemble d'embrayage (1) au moyen des éléments de transmission de force (230).

2. Ensemble d'embrayage (1) selon la revendication 1, **caractérisé en ce qu'**un couple partiel (M_{Ax}) peut être transmis entre les disques à lamelles (12, 22) au moyen d'une liaison par friction pouvant être réglée axialement.

3. Ensemble d'embrayage (1) selon la revendication 1 ou 2, **caractérisé en ce que** l'ensemble d'embrayage (1) comprend deux porte-lamelles (10, 20) et, pour chaque porte-lamelles (10, 20), au moins une lamelle (12, 22), le porte-lamelles respectif (10, 20) pourvu de son disque à lamelles (12, 22) étant monté de manière mobile dans la direction axiale (Ax) de l'ensemble d'embrayage (1) et étant relié sensiblement solidairement en rotation dans la direction circonférentielle (Um) de l'ensemble d'embrayage (1).

4. Ensemble d'embrayage (1) selon la revendication 3, **caractérisé en ce qu'**un couple partiel (M_{Ra}) peut être transmis entre les porte-lamelles (10, 20) par le biais des éléments de transmission de force (230) au moyen d'une liaison par friction réglable radialement.

5. Ensemble d'embrayage (1) selon l'une des revendications 1 à 4, **caractérisé en ce que** les éléments de transmission de force (230) de l'au moins un disque à lamelles (22) sont réglés dans le disque à lamelles (22) de telle sorte que, lorsqu'un premier porte-lamelles (10/20) est soumis à un couple (M) et que les disques à lamelles (12, 22) sont soumis à une force axiale (Ax), le couple (M ; M_{Ax}, M_{Ra} ; M_{Ra}) peut être introduit dans le deuxième porte-lamelles (20/10).

6. Ensemble d'embrayage (1) selon l'une des revendications 1 à 5, **caractérisé en ce que**, lorsque les disques à lamelles (12, 22) sont soumis à la force axiale (Ax), les éléments de transmission de force (230) s'engagent d'une part avec une partie (202) du deuxième porte-lamelles (20/10) attaquent et siègent fermement sur celle-ci, les éléments de transmission de force (230) s'engagent alors d'autre part par friction avec une partie (101) du premier porte-lamelles (10/20).

7. Ensemble d'embrayage (1) selon l'une des revendications 1 à 6, **caractérisé en ce que**, lorsque la force axiale (Ax) commence à s'exercer sur les disques à lamelles (12, 22), les éléments de transmission de force (230) se déplacent radialement vers l'intérieur ou radialement vers l'extérieur et transmettent le couple (M_{Ra}) entre les porte-lamelles (10, 20).

8. Ensemble d'embrayage (1) selon la revendication 7, **caractérisé en ce que** les éléments de transmission de force (230) s'engagent dans des évidements (202) ménagés dans le deuxième porte-lamelles (20/10) et transmettent le couple (M_{Ra}) au deuxième porte-lamelles (20/10), ou les éléments de transmission de force (230) s'engagent dans des évidements ménagés dans le premier porte-lamelles (10/20) et transmettent le couple (M_{Ra}) par friction au premier porte-lamelles (10/20).

9. Ensemble d'embrayage (1) selon l'une des revendications 1 à 8, **caractérisé en ce que** :
• la bague intérieure (10/20) est conçue en première approximation sous la forme d'un cylindre creux et comporte de préférence une denture radialement à l'intérieur ;
• la bague intérieure (10/20) comporte radialement à l'extérieur une denture au moyen de laquelle l'au moins une lamelle intérieure (12/22) peut être montée solidairement en rotation sur la bague intérieure (10/20)de manière à pouvoir coulisser axialement ;
• la bague extérieure (20/10) est conçue en première approximation sous la forme d'un cylindre creux et comporte une denture radialement à l'extérieur ; et
• la bague extérieure (20/10) comporte radialement à l'intérieur les évidements (202) qui s'étendent dans la direction axiale (Ax) et au moyen desquels l'au moins une lamelle extérieure (22/12) peut être montée principalement ou sensiblement solidairement en rotation dans la bague intérieure (20/10) et de manière à pouvoir coulisser axialement.
